Europäisches Patentamt

European Patent Office

Office européen des brevets

(19)

(11) Veröffentlichungsnummer: **0 102 635**
**A2**

(12) **EUROPÄISCHE PATENTANMELDUNG**

(21) Anmeldenummer: 83108707.7

(22) Anmeldetag: 03.09.83

(51) Int. Cl.³: **B 60 R 21/10**

(30) Priorität: 04.09.82 DE 3232946

(43) Veröffentlichungstag der Anmeldung:
14.03.84 Patentblatt 84/11

(84) Benannte Vertragsstaaten:
DE FR GB IT SE

(71) Anmelder: Schmalz, Wolfgang
Buchheimerstrasse 36
D-5000 Köln 80(DE)

(72) Erfinder: Schmalz, Wolfgang
Buchheimerstrasse 36
D-5000 Köln 80(DE)

(74) Vertreter: Bauer, Wulf, Dr.
Wolfgang-Müller-Strasse 12
D-5000 Köln 51 (Marienburg)(DE)

(54) Sicherheitsgurt, insbesondere mit automatischer Aufrollvorrichtung, mit einem den Auflagedruck mindernden Polsterteil.

(57) Bei dem Sicherheitsgurt mit automatischer Aufrollvorrichtung wird ein breites, dünnes und flexibles Gurtband von einem den Auflagedruck mindernden Polsterteil umgriffen, das als ein längliches, aufblasbares Kissen ausgebildet ist. Es hat eine Vielzahl von einzelnen, miteinander verbundenen Kammern. Die Ränder des Gurtbandes werden unter Luftpolsterung umgriffen. Die Kissenseite befindet sich auf der Anlageseite des Gurtbandes. Die Länge der Auflagebereiche entsprechen der Länge des Kissens. Schließlich ist eine Vorrichtung zum Aufblasen und Entlüften des Kissens vorgesehen.

FIG. 2

DR. RER. NAT. WULF BAUER
PATENTANWALT

WOLFGANG-MÜLLER-STRASSE 12
D-5000 KÖLN 51 (MARIENBURG)
TELEFON (0221) 39 53 39 + 38 25 71

S 2 1/82 EPA

Anmelder: Wolfgang Schmalz, Buchheimer Str. 36, 5000 Köln 80

Bezeichnung: Sicherheitsgurt, insbesondere mit automatischer Aufrollvorrichtung, mit einem den Auflagedruck mindernden Polsterteil

Die Erfindung betrifft einen Sicherheitsgurt, insbesondere mit automatischer Aufrollvorrichtung und vorzugsweise einen Dreipunktgurt, mit einem breiten, dünnen, flexiblen, dehnbar-zugfesten, auf den Körper eines zu sichernden Passagiers auflegbaren Gurtband, das von einem den Auflagedruck mindernden Polsterteil umgriffen wird.

Bei dem bekannten Sicherheitsgurt dieser Art umgreift ein Schaumstoffkissen den Obergurt eines Dreipunktgurtes auf einem Weg von etwa 30 cm. Das Schaumstoffkissen kann entlang des Obergurtes verschoben werden und soll im Bereich der Auflagefläche des Sicherheitsgurtes auf einer Schulter positioniert werden, um dort den Auflagedruck zu mindern.

Nachteilig bei diesem bekannten Sicherheitsgurt mit Polsterteil ist, daß der Auflagedruck nur über eine relativ kurze Länge des gesamten Auflagebereichs des Gurtbandes auf einem Passagier verringert wird. Weiterhin ist das bekannte Schaumstoffkissen relativ dick, so daß ein Passagier bei einer Unfallsituation, beispielsweise bei einem Frontalauffahrunfall, zunächst das Schaumstoffkissen zusammendrückt, bevor das Gurtband selbst gelängt wird. Vorteilhafter wäre es jedoch, den Gurt unmittelbar und ohne eine Vorlaufstrecke, wie sie durch das Schaumstoffkissen erreicht wird, zu belasten, weil dann der Passagier nicht bereits mit einem

- 2 -

gewissen Impuls in den Gurt geschleudert wird, sondern den Gurt von Anfang an dehnt, so daß dieser die unfallbedingten Verzögerungen weich auffangen kann.

Andererseits hat das bekannte Kunststoffkissen jedoch auch deutliche Vorteile, diese liegen darin, daß der Auflagedruck des Gurtbandes insbesondere im Bereich der Kante des Gurtbandes deutlich verringert wird, so daß insbesondere auch empfindlich reagierende Menschen den Sicherheitsgurt anzulegen bereit sind, wodurch wiederum ihre Sicherheit im Falle eines Unfalls erhöht wird. Weiterhin vermeidet das bekannte Schaumstoffkissen ein Rutschen des Gurtbandes auf dem Körper des Passagiers, wodurch dieser die optimale Anlagefläche für den Gurt auf seinem Körper bestimmen kann.

Hiervon ausgehend ist es Aufgabe der Erfindung, die Vorteile des bekannten Polsterteils in Form eines Kunststoffkissens beizubehalten und den Sicherheitsgurt mit Polsterteil dahingehend weiterzubilden, daß die aufgezeigten Nachteile vermieden werden und ein Sicherheitsgurt geschaffen wird, der eine bequemere Auflage und somit einen geringeren Auflagedruck ermöglicht und zudem in gewissem Maße eine Luftzirkulation auf der Auflageseite gewährleistet.

Diese Aufgabe wird bei einem Sicherheitsgurt der eingangs genannten Art dadurch gelöst, daß das Polsterteil als ein längliches, aufblasbares Kissen ausgebildet ist,
- das aus einer Vielzahl von einzelnen, miteinander verbundenen Kammern aufgebaut ist,
- das die Ränder des Gurtbandes unter Luftpolsterung umgreift,
- dessen Kissenfläche sich auf der Anlageseite des Gurtbandes befindet,

- dessen Länge der Länge der Auflagebereiche entspricht, und

- daß eine Vorrichtung zum Aufblasen und Entlüften des Kissens vorgesehen ist.

Bei diesem Polsterteil in Form eines aufblasbaren Kissens kann über den Luftdruck im Kissen eine harte oder eine weiche Auflage mit allen Zwischenstufen eingestellt werden. Der Benutzer kann somit den ihm bequemsten Auflagedruck wählen, wodurch er die Auflage des Gurtes als weniger störend empfindet. Bei Nichtgebrauch des Gurtes kann der im Kissen herrschende Luftdruck abgebaut werden, der Sicherheitsgurt ist in diesem Fall nicht wesentlich dicker als das Gurtband, jedenfalls nimmt er deutlich weniger Platz ein als der bekannte Sicherheitsgurt mit aufgeschobenem Schaumstoffkissen.

Auf Grund der vielen einzelnen, kissenförmigen Kammern, die zur Auflageseite des anmeldungsgemäßen Sicherheitsgurtes hin vorstehen, bleiben zwischen den einzelnen Kammern Kanäle frei, durch die Luft strömen kann. Der anmeldungsgemäße Sicherheitsgurt liegt damit nicht großflächig auf, vielmehr wird jede einzelne Auflagefläche von einem Kanal umgeben, durch den Luft strömen kann. Der Benutzer schwitzt dadurch im Auflagebereich des Sicherheitsgurtes deutlich weniger als dies bei dem bekannten Sicherheitsgurt der Fall ist. Auch dadurch ist der anmeldungsgemäße Sicherheitsgurt bequemer zu tragen.

Schließlich erstreckt sich das so beschriebene Polsterteil über die Gesamtlänge der Auflagebereiche, so daß nicht nur lokal die Trageeigenschaften verbessert werden, sondern der anmeldungsgemäße Sicherheitsgurt insgesamt sich günstiger benutzen läßt. Wenn die Oberfläche des Kissens entsprechend ausgebildet ist, wird zugleich eine rutschfeste Auflage über

- 4 -

den gesamten Auflagebereich erzielt, so daß der Sicherheitsgurt eine günstige Auflageposition beibehalten kann.

Wie bei dem Sicherheitsgurt der eingangs genannten Art
bleibt als eigentliches Zugelement, das die unfallbedingten
Kräfte allein aufnehmen kann, das Gurtband erhalten. Das
aufblasbare Kissen trägt zur mechanischen Festigkeit des Sicherheitsgurtes nicht bei, die mechanischen Eigenschaften
werden ausschließlich durch das Gurtband bestimmt. Dieses
kann somit auf optimale mechanische Werte ausgelegt werden,
ohne auf bequeme Auflage und geringen Auflagedruck achten zu
müssen. Letztere Aufgaben übernimmt das aufblasbare Kissen,
das lediglich die Trageigenschaften verbessern soll.

Vorzugsweise ist bei einem Sicherheitsgurt in Form eines
Dreipunktgurtes für den Obergurt und den Beckengurt jeweils
ein getrenntes Kissen vorgesehen. Dadurch lassen sie die
Auflageeigenschaften beider Gurtteile unabhängig voneinander
bestimmen, das Kissen des Beckengurtes kann beispielsweise
mit höherem Druck gefüllt werden als das Kissen des Obergurtes, weil besonders bei letzterem der Auflagedruck häufiger
als störend empfunden wird.

Das aufblasbare Kissen ist entweder mit dem Gurtband rutschfest verbunden, diese Ausführung empfiehlt sich für die Neuausrüstung von Fahrzeugen, oder es kann gegenüber dem Gurtband verschoben werden. Im letzteren Fall wird über Bänder,
die an den Längsenden des Kissens und in Nähe der Befestigungsbereiche bzw. am Steckteil des Gurtes befestigt sind,
eine selbsttätige Positionierung des Kissens gegenüber dem
Gurtband erreicht, sobald der Sicherheitsgurt angelegt wird.

- 5 -

Auf Grund des zusätzlichen Kissens ist der anmeldungsgemäße Sicherheitsgurt dicker als das Gurtband. Dennoch eignet er sich im Gegensatz zu dem Sicherheitsgurt der eingangs genannten Art für Sicherheitsgurte mit automatischer Aufrollvorrichtung. Auch hierin liegt ein Vorzug gegenüber dem bekannten Sicherheitsgurt. Bei einem mit dem Gurtband verbundenen Kissen wird bei Neuausrüstungen ausreichend Platz im Kanal zwischen der oberen Einlauföffnung des Obergurtes und der zumeist tief angeordneten Aufwickeltrommel geschaffen, so daß der nicht aufgeblasene Gurt diesen Kanal durchlaufen kann. Gegebenenfalls muß die Aufwickeltrommel geringfügig vergrößert werden. Da jedoch der größte Anteil des Sicherheitsgurtes sich bei eingezogenem Obergurt im beschriebenen Kanal befindet, vergrößert sich die Wicklung auf der Aufwickeltrommel praktisch nicht.

Bei gegenüber dem Gurtband rutschfähigem Kissen wird vorgeschlagen, das Kissen mit abwechselnd gerichteten Faltlinien auszurüsten, so daß es im nichtaufgeblasenen Zustand eine ziehharmonikaartige Form annimmt, also eine wesentlich kürzere Länge als im aufgeblasenen Zustand aufweist. Um es für den Gebrauch wieder zu längen, sind die bereits beschriebenen Bänder vorgesehen.

Vorteilhaft für die Nachrüstung von Kraftfahrzeugen sind Kissen mit zwei länglichen, flexiblen Befestigungsstreifen, die auf die Außenseite des Gurtbandes anlegbar sind und wechselseitig zusammenwirkende Befestigungsmittel haben. Hierdurch wird das nachträgliche Anbringen eines derartigen Sicherheitsgurtes sehr vereinfacht.

Das Aufblasen des Kissens geschieht zweckmäßigerweise mittels einer Handpumpe in Form eines Druckbalges, wie sie bei-

- 6 -

spielsweise bei Blutdruckmeßgeräten benutzt wird. Alternativ hierzu wird eine bequemere Aufblasvorrichtung vorgeschlagen, bei der das Kissen über einen Schlauch mit einer Druckquelle, zum Beispiel einem Kompressor oder einer Druckluftflasche, verbunden ist. Im Schlauch befindet sich ein Ventil, das am Gurtschloß befestigt ist und durch Einstecken des Steckteils in das Gurtschloß geöffnet wird. Dadurch kann Druckluft aus der Druckquelle in das Kissen strömen, das Kissen wird also selbsttätig aufgeblasen bzw: entleert.

Weitere Merkmale und Vorteile der Erfindung ergeben sich aus den übrigen Ansprüchen sowie der nun folgenden Beschreibung zweier Ausführungsbeispiele, die lediglich beispielhaft zu verstehen sind und unter Bezugnahme auf die Zeichnung erläutert werden. In dieser zeigen:

Fig. 1     eine perspektivische Darstellung eines Dreipunkt-Sicherheitsgurtes an einem Vordersitz eines PKW,

Fig. 2     eine perspektivische Darstellung eines Sicherheitsgurtes eines Fondsitzes im nichtbenutzten, aufgerollten Zustand,

Fig. 3     einen Schnitt entlang der Schnittlinie III-III in Figur 1,

Fig. 4     eine vereinfachte, perspektivische Darstellung eines Dreipunkt-Sicherheitsgurtes mit Aufblasautomatik, und

Fig. 5     eine perspektivische Darstellung einer Einlaufanordnung für den Sicherheitsgurt gemäß Figur 4.

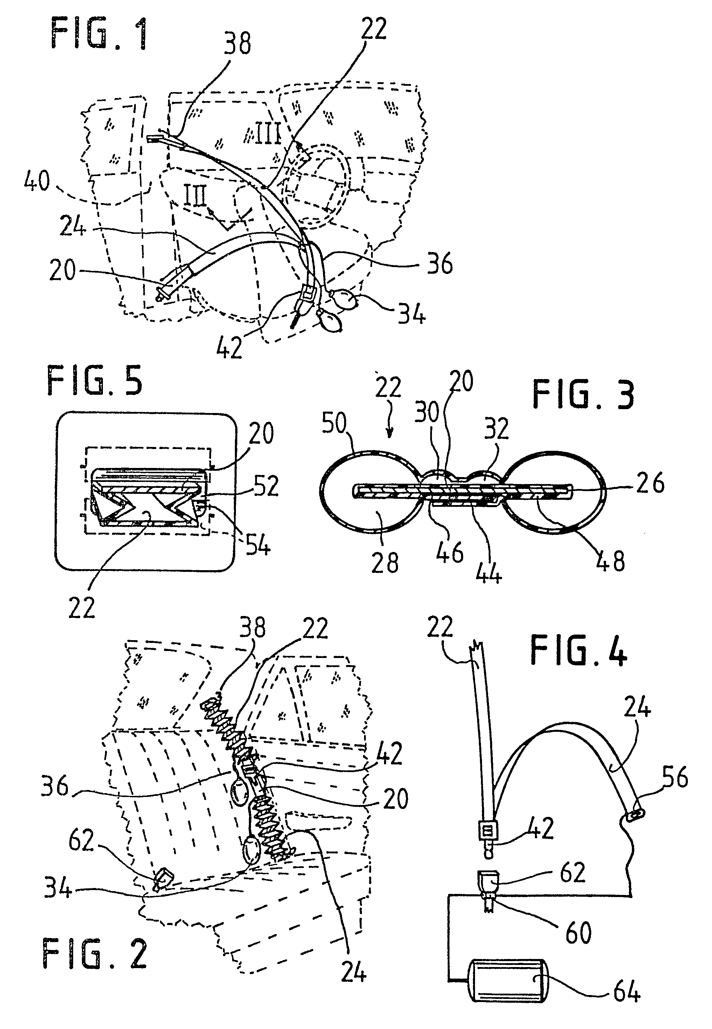

Die in den Figuren gezeigten Sicherheitsgurte sind Dreipunktgurte, sie sind weiterhin mit einer automatischen Aufrollvorrichtung versehen. In bekannter Weise hat der Sicherheitsgurt ein breites, dünnes, flexibles, dehnbar-zugfestes, auf den Körper eines zu sichernden Passagiers auflegbares Gurtband 20. Es wird von einem Polsterteil in Form eines länglichen, aufblasbaren Kissens 22, 24 umgriffen. Dabei ist das Kissen 22 dem Obergurt zugeordnet, das Kissen 24 übergreift den Beckengurt. Beide Kissen 22, 24 sind, wie Figur 1 zeigt, jeweils so lang gewählt, daß sie sich über die Länge der Auflagebereiche des Gurtbandes 20 auf einem Passagier erstrecken.

Wie Figur 3 zeigt, umgreift jedes Kissen 22, 24 die Ränder 26 des Gurtbandes 20 und der Luftpolsterung so daß diese Ränder 26 besonders gut abgepolstert werden. Jedes Kissen besteht aus einzelnen, miteinander verbundenen Kammern 28 bis 32, die im wesentlichen quadratisch ausgebildet sind, jedoch auch andere Formen annehmen können.

Wie Figur 3 zeigt, befinden sich die Kammern 28 bis 32 auf der Anlageseite des Gurtbandes 20, wodurch zwischen Benutzer und Gurtband 20 ein Luftpolster auftritt. Die seitlichen Kammern 28 befinden sich auch auf der in Figur 3 untenliegenden Außenseite des Gurtbandes 20, jedoch ist der Raum zwischen ihnen nicht luftgepolstert, vielmehr wird er für eine Befestigungsvorrichtung benutzt, auf die später noch eingegangen wird.

Im ersten Ausführungsbeispiel, das in den Figuren 1 bis 3 gezeigt ist, ist jedem Kissen 22, 24 als Vorrichtung zum Aufblasen und Entlüften eine Handpumpe 34 zugeordnet, die über einen Schlauch 36 mit dem jeweiligen Kissen 22 bzw. 24 in Verbindung steht.

Das Kissen 22, 24 im Ausführungsbeispiel nach den Figuren 1 bis 3 kann leicht gegenüber dem Gurtband 20 verschoben werden. Um es bei ausgezogenem Sicherheitsgurt in die richtige Position zu bringen, ist an jedem Längsende jedes Kissens 22, 24 jeweils ein flexibles Band 38 befestigt, das seinerseits in Nähe der Haltebereiche des Sicherheitsgurtes befestigt ist. Die Gesamtlänge der beiden Bänder 38 und des zugehörigen Kissens 22 bzw. 24 entspricht der Gesamtlänge des entsprechenden Gurtteils, beispielsweise des Obergurtes im ausgefahrenen, benutzten Zustand, wie er in Figur 1 dargestellt ist. Die Länge der Bänder 38 und die Länge des Kissens 22 bzw. 24 ist so gewählt, daß das Kissen bei ausgezogenem Gurtband 20 selbst in Anlage an den Passagier kommt.

Die beim Kissen 22, 24 im Ausführungsbeispiel nach den Figuren 1 bis 3 haben abwechselnd gerichtete Knicklinien in ihrer Querrichtung. Wenn die Luft aus den Kissen 22, 24 gelassen wird und die automatische Aufrollvorrichtung den Obergurt einzieht, falten sich die beiden Kissen 22, 24 ziehharmonikaartig, wie es in Figur 2 dargestellt ist. Dadurch stört der nichtbenutzte Gurt praktisch nicht und die Kissen werden zugleich örtlich fixiert.

Die in Figur 1 bis 3 gezeigten Kissen 22, 24 lassen sich nachträglich auf einen herkömmlichen Dreipunktgurt auflegen, ohne den Gurt vorher demontieren zu müssen. Hierzu hat jedes Kissen 22, 24 eine Befestigungsvorrichtung, die es in der ringförmig geschlossenen Form, wie sie in Figur 3 gezeigt ist, hält. An den Kissen sind zwei längliche, flexible Befestigungsstreifen 44, 46 vorgesehen, jede Längskante eines Kissens 22, 24 hat einen derartigen Befestigungsstreifen 44 bzw. 46. Beide Befestigungsstreifen 44, 46 sind mit den Teilen eines Klettverschlusses flächenhaft belegt, so daß der in Figur 3 gezeigte, überlappende Halt erreicht wird. Auf Grund des Klettverschlusses ist eine Demontage jederzeit möglich. Andere Befestigungsvorrichtungen, die beispielsweise durch Verkleben oder Vernähen usw. wirken, sind ebenfalls möglich.

Jedes Kissen 22, 24 selbst besteht aus einer Innenhaut 48, die sich eng an die Oberfläche des Gurtbandes 20 anschmiegt und einer Außenhaut 50 mit kissenartigen, die einzelnen Kammern 28 bis 32 bildenden Auswölbungen. Innenhaut 48 und Außenhaut 50 sind luftdicht miteinander verbunden. Im Bereich der Kammern 30 und 32 dient die Innenhaut 48 auch dazu, ein Strecken dieser Kammern 30, 32 beim Aufblasen zu vermeiden.

Die Kissen 22, 24 sind aus gummigetränktem Gewebe, wie es auch für Luftmatratzen verwendet wird, hergestellt. Andere Materialien können stattdessen ebenfalls Verwendung finden. Die am Gurtband 20 anliegende Fläche der Innenhaut 48 hat einen geringen Reibungsbeiwert gegenüber dem Gurtband 20, so daß die Kissen 22, 24 leicht gegenüber dem Gurtband verschoben werden können. Die Außenfläche der Außenhaut 50 ist rutschfest beschichtet, beispielsweise mit einem dünnen Noppengummi, wie er für Tischtennisschläger verwendet wird, belegt. Dadurch rutscht der Gurt praktisch nicht, sobald er angelegt ist.

Das zweite Ausführungsbeispiel gemäß den Figuren 4 und 5 eignet sich insbesondere für den Einbau in Kraftfahrzeuge während der Herstellung dieser Kraftfahrzeuge im Werk, jedoch ist auch eine nachträgliche Ausrüstung von Kraftfahrzeugen möglich, sie erfordert jedoch größere Umbaumaßnahmen.

Im Ausführungsbeispiel nach den Figuren 4 und 5 sind die Kissen 22 und 24 fest mit dem jeweiligen Teil des Gurtbandes 20 verbunden. Dadurch entfallen Bänder 38, Knicklinien oder eine spezielle Befestigungsvorrichtung. Das Gurtband 20 ist einstückiges Bestandteil der zugehörigen Kissen 22, 24, die Kissen 22, 24, die aus einzelnen hintereinander angeordneten Kammern bestehen, können sehr flach zusammengefaltet werden. Dadurch ist es möglich, daß sie in die Einlaßöffnung 52 einer automatischen Gurtaufrollvorrichtung einlaufen und nicht so, wie die Kissen 22, 24 im ersten Ausführungsbeispiel, sich vor dieser Einlauföffnung stauen. Die Einlauföffnung 52 ist breiter ausgelegt als bei einem herkömmlichen Sicherheitsgurt ohne Polsterteil, im gezeigten Ausführungsbeispiel besteht sie aus zwei parallelen Rollen 54 aus einem nachgiebigen Material, die so gegeneinander gedrückt werden, daß das zwischen ihnen befindliche Kissen 22, 24 luftdicht abgeschnürt wird.

Weiterhin ist in diesem zweiten Ausführungsbeispiel eine automatische Aufblasvorrichtung vorgesehen, auf die im folgenden eingegangen wird: Die beiden Kissen 22, 24 des Dreipunktgurtes sind miteinander so verbunden, daß sie gemeinsam gefüllt und entleert werden können. Das dem Steckteil 42 gegenüberliegende Befestigungsende 56 des Beckengurtes, das auch beim Aufwickeln des Sicherheitsgurtes sich nur geringfügig bewegt, ist mit einem Schlauch 58 verbunden, über den beide Kissen 22, 24 gefüllt und entleert werden können. In diesem Schlauch 58 ist ein Ventil 60 angeordnet, das mit einem Gurtschloß 62 so verbunden ist, daß es durch Einstecken des Steckteils 42 in das Gurtschloß 62 betätigt wird. Der Schlauch 58 ist mit einer Druckluftquelle 64, die hier als Pressluftzylinder ausgeführt ist, verbunden.

Sobald das Steckteil 42 in das Gurtschloß 62 eingesteckt wird und dadurch das Ventil 60 geöffnet wird, füllen sich die Kissen 22, 24 mit der von der Druckluftquelle 64 gelieferten Luft. Über eine geeignete Vorrichtung, beispielsweise ein Druckmindererventil, wird sichergestellt, daß die Kissen 22, 24 nicht zu stark aufgeblasen werden können. Weiterhin sind Überdruckventile in den Kissen 22, 24 vorgesehen, die bei Überschreiten eines Drucks innerhalb des Kissens selbstständig öffnen.

Wird das Steckteil 42 wieder aus dem Gurtschloß 62 herausgezogen, wird die Druckluftseite verschlossen, der zu den Kissen 22, 24 führende Ausgang des Ventils 60 wird zur Atmosphäre hin geöffnet, so daß die Druckluft aus den Kissen 22, 24 abströmen kann. Die Aufrollautomatik kann nun den Obergurt in die Einlauföffnung 52 hineinziehen, wobei der Obergurt eingefaltet wird und sich der gesamte Gurt streckt.

Besonders vorteilhaft ist ein Ventil 60, das wie folgt mit dem Steckteil 42 zusammenwirkt: Immer wenn das Steckteil 42 in das Gurtschloß 62 eingesteckt ist, ist das Ventil 60 geöffnet. Das Ventil ist beispielsweise als Kugelventil ausgeführt, dessen Kugel durch einen Vorsprung im Gurtschloß 62 aus ihrem Dichtsitz gedrückt gehalten wird. Entnimmt man das Steckteil 42 aus dem Gurtschloß, so bleibt aufgrund einer Umschaltmechanik, wie sie für Druck-Kugelschreiber bekannt ist, abwechselnd das Ventil 60 einmal geschlossen, so daß der Gurt aufgeblasen bleibt, beim nächsten Mal jedoch geöffnet, so daß die Luft frei entweichen kann.

In Weiterbildung der Erfindung wird schließlich vorgeschlagen, daß der erfindungsgemäße Gurt mehrere Ventilationslöcher hat, die jeweils durch ein kurzes Stück Schlauch gebildet werden, das das Gurtband 20 durchsetzt und dicht mit der Außenhaut 50 bzw. der Innenhaut 48 verbunden ist. Dadurch kann Luft durch den Gurt strömen, so daß die Ventilation weiter verbessert wird.

Anmelder: Wolfgang Schmalz, Buchheimer Straße 36,
5000 Köln 80

Bezeichnung: Sicherheitsgurt, insbesondere mit automatischer Aufrollvorrichtung, mit einem den
Auflagedruck mindernden Polsterteil

## Ansprüche

1. Sicherheitsgurt, insbesondere mit automatischer Aufrollvorrichtung und vorzugsweise Dreipunktgurt, mit
einem breiten, dünnen, flexiblen, dehnbar-zugfesten, -
auf den Körper eines zu sichernden Passagiers aufleg-.
baren Gurtband, das von einem den Auflagedruck mindernden Polsterteil umgriffen wird,
dadurch gekennzeichnet, daß das Polsterteil als ein
längliches, aufblasbares Kissen (22,24) ausgebildet
ist, das die Ränder (26) des Gurtbandes (20) unter Luftpolsterung umgreift,
dessen Kissenfläche sich auf der Anlageseite des Gurtbandes (20) befindet,
dessen Länge der Länge der Auflagebereiche entspricht,
das aus einer Vielzahl von einzelnen, miteinander verbundenen Kammern (28-32) aufgebaut ist, und
daß eine Vorrichtung zum Aufblasen und Entlüften des
Kissens (22,24) vorgesehen ist.

2. Sicherheitsgurt nach Anspruch 1 in Form eines Dreipunktgurtes, dadurch gekennzeichnet, daß für den Obergurt und den Beckengurt je ein getrenntes Kissen (22,24)
vorgesehen ist.

3. Sicherheitsgurt nach Anspruch 1 oder 2, dadurch gekennzeichnet, daß die Kissen (22,24) zwei längliche, flexible Befestigungsstreifen (44,46) aufweisen, die auf die Aussenseite des Gurtbandes (20) anlegbar sind und wechselseitig zusammenwirkende Befestigungsmittel haben.

4. Sicherheitsgurt nach einem der Ansprüche 1 bis 3, dadurch gekennzeichnet, daß das Kissen (22,24) um quer zu seiner Längsrichtung verlaufende, vorzugsweise gleichabständig angeordnete Knicklinien mit abwechselnder Knickrichtung zieharmonikaartig zusammenfaltbar ist.

5. Sicherheitsgurt nach Anspruch 4, dadurch gekennzeichnet, daß an den Längsenden des Kissens (22,24) flexible Bänder (38) befestigt sind, die ihrerseits in Nähe der Befestigungspunkte des Gurtbandes (20) bzw. in Nähe des Steckteils (42) gehalten sind.

6. Sicherheitsgurt nach einem der Ansprüche 1 bis 5, dadurch gekennzeichnet, daß die Innenseite des Kissens (22,24) eine gegenüber dem Gurtband (20) einen geringeren Reibungswert aufweisende Oberfläche hat.

7. Sicherheitsgurt nach einem der Ansprüche 1 bis 6, dadurch gekennzeichnet, daß die Vorrichtung zum Aufblasen und Entlüften eine Handpumpe (34) in Form eines Druckbalges ist.

8. Sicherheitsgurt nach Anspruch 1 oder 2, dadurch gekennzeichnet, daß das Kissen (22,24) mit dem Gurtband (20) verbunden, insbesondere einstückig verbunden ist und daß das Kissen (22,24) im nichtaufgeblasenen Zustand flach faltbar ist.

9. Sicherheitsgurt nach Anspruch 8 mit automatischer Aufrollvorrichtung, dadurch gekennzeichnet, daß die Einlauföffnung (52) der Aufrollvorrichtung eine Quetschvorrichtung (Rollen 54) zum Absperren des außenliegenden Teils des Sicherheitsgurtes aufweist, und daß das Kissen (22, 24) über einen Schlauch (58) an eine Druckluftquelle (64) angeschlossen ist, daß sich in dem Schlauch (58) ein Ventil (60) befindet, das mit dem Gurtschloß (62) verbunden ist und durch Einstecken des Steckteils (42) in das Gurtschloß geöffnet wird.

10. Sicherheitsgurt nach einem der Ansprüche 1 bis 9, dadurch gekennzeichnet, daß er Ventilationsdurchlässe aufweist, die vom Innenmantel eines kurzen Schlauchstücks begrenzt werden, das luftdicht mit der Innenhaut (48) und der Außenhaut (50) des Kissens (22, 24) verbunden ist.

FIG. 1

FIG. 5

FIG. 3

FIG. 2

FIG. 4

0102635

1/1